# EUROPEAN PATENT APPLICATION

(11) **EP 4 851 822 A1**
(43) Date of publication of application: **09.12.2026**
(21) Application number: 25180385.4
(22) Date of filing: 03.06.2025
(51) Int. Cl.: G06F 16/334, G06F 16/51

(54) **GENERATING EMBEDDINGS**

(71) Applicant: Koninklijke Philips N.V., 5656 AE Eindhoven (NL)
(72) Inventor: BULUT, Murtaza, Eindhoven (NL); KRANS, Jan Martijn, Eindhoven (NL); TYMOSHENKO, Kateryna, 5656AG Eindhoven (NL)
(74) Representative: Philips Intellectual Property & Standards

(57) **Abstract**

Proposed concepts thus aim to provide schemes, solutions, concepts, designs, methods and systems pertaining to generating embeddings for a reference document. In particular, embodiments aim to provide a method for answering queries by considering the spatial relationship between text and at least one non-textual element in the reference document and then using this either during embedding of the reference document such that the relationship can be stored together with the text or by storing the information separately, therefore facilitating retrieval of relevant non-textual elements when text is retrieved in future.

## Description

### FIELD OF THE INVENTION

This invention relates to the field of generating embeddings, and in particular, to the field of generating embeddings for a reference document.

### BACKGROUND OF THE INVENTION

Multimodality refers to the ability to handle different types of data. A process is multimodal if it is able to process different types of data such as text, images, audio, video, and tables - each of these are different modalities.

There are different known approaches for dealing with documents that contain both text and images for Retrieval Augmented Generation (RAG) implementation. The idea of a multimodal RAG is to make the system capable of handling different modalities resulting in not only being able to retrieve pieces of text (like the majority of typical RAGs) but also retrieve and generate images, audio, video and other types of data. The retrieval is typically done for the purpose of feeding this information (text, images, etc.) into the language model where generation happens.

A first example of a known approach for a multimodal RAG is joint embedding through a shared vector space. In this approach, images and text are learned simultaneously, for example, using an algorithm which is trained to predict if some arbitrary text is compatible with an image or not. By having a shared vector space, text and image vectors close to the query vectors can be found and the corresponding raw text and images can be retrieved. These can then be used by the LLM to generate the output for the user query.

A second example of a known approach for a multimodal RAG is single grounded modality. In this approach, all input is converted into text and the embeddings are generated for the text. This means that image content, audio content, etc. is transformed to/described as text. During retrieval, the text summaries are used to find the closest vectors. Afterwards, the corresponding raw text and images, as well as their text summaries are used as input for the large language model.

Other approaches that combine the different components of the above two approaches have also been considered. For example, separate retrieval can be done for images and text and the output from the two retrieval systems can be ranked and compared. During the generation stage, raw images or a summary of the images or both can be used. Text summaries can be used in addition to the raw text.

Assuming that the user query is in text form, in all cases, the images will need to be linked to or represented as some type of text. In the first example, this is done through machine learning algorithms trained with image and text pairs. In the second example, a machine learning algorithm is used to describe the image as text.

However, for clinical instruction for use (IFU) and manual documents, such image-to-text linking, or transformation does not yet exist. Furthermore, using typical large language models (LLM) to describe images as text is not suitable as some of the images are very complex. In particular, clinical IFU and service manuals contain un-captioned, complex figures that are hard to describe as well as hard-to-relate-to text chunks. Moreover, images can appear in a variety of different positions with respect to the text, making them hard to reliably retrieve. For LLM-driven applications such as RAG solutions trained with IFUs, it would also be desirable to be able to show the images alongside text in the generated output.

### SUMMARY OF THE INVENTION

The invention is defined by the claims.

According to examples in accordance with an aspect of the invention, there is provided a computer-implemented method for generating embeddings for a reference document.

The method comprises: generating spatial information for a reference document, the reference document comprising text and at least one non-textual element, and the spatial information indicating a spatial relationship between the text and the at least one non-textual element; and inputting the reference document into an embedding model to generate embeddings for the reference document; wherein the spatial information is also input into the embedding model to generate embeddings for the reference document or the spatial information is stored.

Proposed concepts thus aim to provide schemes, solutions, concepts, designs, methods and systems pertaining to generating embeddings for a reference document. In particular, embodiments aim to provide a method for generating embeddings for a reference document by considering the spatial relationship between text and at least one non-textual element in the reference document and then either using this during embedding of the reference document such that the relationship can be stored together with the text or separately storing this information, therefore facilitating retrieval of relevant non-textual elements when relevant text is retrieved in future.

By considering the spatial relationship between non-textual elements (e.g., images) and text in the reference document, a relevance of the non-textual elements to the text can be inferred. For example, it can be assumed that the closer an image is to a paragraph of text in a reference document, the more relevant it is for said paragraph of text. Thus, when a paragraph of text is retrieved during answer generation for a user's query, spatial information (also stored, either in the embeddings for the reference document or separately) can be used to also retrieve any nearby images. An effective and efficient method of facilitating the retrieval of relevant non-textual elements during retrieval of text (e.g., using a RAG model) is thus provided via storing spatial information, either together with the text in embeddings or separately.

This invention is of particular benefit when used in clinical applications, or in other contexts where errors cannot be tolerated, because it allows for (during answer generation using the embeddings and spatial information) more accurate representation of the textual and non-textual elements in an output and/or enables more reliable detection of such errors. However, any document which contains text and non-textual elements can benefit from the proposed invention, though especially those in which the non-textual element (e.g., figures) are complicated, technical, or non-common (as automatically generated captions, for example, would be less likely to be accurate).

Ultimately, an improved method for generating embeddings for a reference document is provided.

In some embodiments, the spatial information may also be input into the embedding model, the spatial information may comprise an output of a machine-learning model, and generating the spatial information may comprise: training the machine-learning model on extracted coordinates of the text and the at least one non-textual element in the reference document; and using the trained machine-learning model to generate the output, the output comprising coordinates of relevant elements for each textual element of the reference document. This provides a particularly effective form of spatial information, allowing a machine-learning model to essentially learn the spatial relationship between text elements in the reference document and one or more non-textual elements and thus output coordinates of relevant elements (textual and/or non-textual) for each textual element.

In some embodiments, the spatial information may comprise coordinate information for a plurality of chunks of text in the reference document and the at least one non-textual element. This provides another particularly effective form of spatial information, allowing the spatial relationships of various chunks of the text with the at least one non-textual element to be stored, therefore allowing the relevance of the non-textual element to the text to be more finely determined on a chunk-level.

In some embodiments, the spatial information may be stored, and the spatial information may comprise a machine-learning model trained on extracted coordinates of the text and the at least one non-textual element in the reference document. This allows the ML model to be used at the time of answering a query to find a relevant non-textual element rather than having to be used before embedding the reference document.

In some embodiments, the at least one non-textual element may comprise at least one of: an image; a figure; a table; and a white space of a size above a predetermined threshold. These are all particularly useful examples of non-textual elements which it may be beneficial to retrieve and output during answer generation.

In some embodiments, the at least one non-textual element may comprise a table, and wherein the spatial information may comprise coordinates of table entries within the table. This provides a useful way to allow a model to understand, retrieve and use information contained within a table.

In some embodiments, the reference document may further comprise at least one indexing element, and the spatial information may further indicate the spatial relationship between the at least one indexing element and the text and the at least one non-textual element; and wherein an indexing element may comprise at least one of: a chapter name; a section name; a page number; a number of figures and/or images per page; information indicating the relationship between rows and columns of a table; information indicating the size of images; a number of tables per page; information indicating page design; and information indicating white space size and position. This thus allows useful additional/supplementary information to be stored along with the text in the embeddings for the reference document which may inform answer generation using the reference document, for example, taking into account the structuring of the reference document.

In some embodiments, the method may further comprise: generating first supplementary information for the reference document, the first supplementary information comprising at least one visual property of the text and/or the at least one non-textual element; and wherein generating the spatial information is further based on the generated first supplementary information. This also allows further useful additional/supplementary information to be stored along with the text in the embeddings for the reference document which may inform answer generation using the reference document, for example, taking into account purely visual properties of elements which may inform importance/relevancy of the element, for example.

In some embodiments, a visual property may comprise at least one of: size; color; font; and formatting. These are all useful visual properties which may, for example, imply an importance/relevancy of the element.

In some embodiments, the method may further comprise: generating second supplementary information for the reference document, the second supplementary information comprising at least one qualitative property of the text and/or the at least one non-textual element; and wherein generating the spatial information is further based on the generated second supplementary information. This also allows useful additional/supplementary information to be stored along with the text in the embeddings for the reference document which may inform answer generation using the reference document, for example, taking into account purely qualitative properties of elements which may inform importance/relevance of the element, for example.

In some embodiments, a qualitative property may comprise at least one of: significant; uniqueness; level of detail; complexity; prominence; and type. These are all useful qualitative properties which may, for example, imply an importance/relevancy of the element.

According to another aspect of the invention, there is provided a computer-implemented method for answering a query related to a reference document for which embeddings have been generated using a method according to any herein-disclosed embodiment, wherein the spatial information was also input into the embedding model to generate the embeddings for the reference document, the method comprising: receiving a first query from an agent; processing the first query with the embedding model used to generate the embeddings to generate a query embedding; retrieving at least one text chunk and at least one relevant non-textual element from the reference document using the query embedding and the embeddings generated for the reference document; inputting the retrieved at least one text chunk into a large language model, LLM, based model to generate a preliminary answer; and outputting an answer based on the generated preliminary answer and the retrieved at least one relevant non-textual element. In this way, the generated embeddings for the reference document can be utilised to provide an agent with a relevant non-textual element for their query in cases where the spatial information was embedded with the reference document.

In some embodiments, the embeddings comprise embeddings generated from an output of a machine-learning model trained on extracted coordinates of the text and the at least one non-textual element in the reference document, and the output comprising coordinates of relevant elements for each textual element of the reference document. As described above, an output of a machine-learning model is a particularly effective form of spatial information

According to another aspect of the invention, there is provided a computer-implemented method for answering a query related to a reference document for which embeddings have been generated using a method according to any herein-disclosed embodiment, wherein the spatial information was stored, the method comprising: receiving a first query from an agent; processing the first query with the embedding model used to generate the embeddings to generate a query embedding; retrieving at least one text chunk from the reference document using the query embedding and the embeddings generated for the reference document; using the stored spatial information to locate at least one non-textual element relevant to the retrieved at least one text chunk in the reference document; retrieving the located at least one non-textual element; inputting the retrieved at least one text chunk into a large language model, LLM, based model to generate a preliminary answer; and outputting an answer based on the generated preliminary answer and the retrieved at least one relevant non-textual element.

In some embodiments, the LLM based model may comprise a Retrieval Augmented Generation, RAG, model. The invention may be of particular use with RAG models which are focused on retrieval of relevant information.

According to another aspect of the invention, there is provided a computer program product comprising computer program code means which, when executed on a computing device having a processing system, cause the processing system to perform all the steps of the method of any herein disclosed method.

According to another aspect of the invention, there is provided a system for generating embeddings for a reference document. The system comprises a processing arrangement configured to: generate spatial information for a reference document, the reference document comprising text and at least one non-textual element, and the spatial information indicating a spatial relationship between the text and the at least one non-textual element; and input the reference document into an embedding model to generate embeddings for the reference document; wherein the spatial information is also input into the embedding model to generate embeddings for the reference document or the spatial information is stored.

Thus, there may be proposed concepts for generating embeddings for a reference document, and this may be done based on considering the spatial relationship between text and at least one non-textual element in the reference document and then storing this information or using it during embedding of the reference document such that the relationship can be stored together with the text, therefore allowing retrieval of relevant non-textual elements when relevant text is retrieved.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a flow diagram of a method for generating embeddings for a reference document according to a proposed embodiment;
Fig. 2 is a flow diagram of a method for generating embeddings for a reference document wherein the spatial information comprises an output of a machine-learning model according to a proposed embodiment;
Fig. 3 is a flow diagram of a method for generating embeddings for a reference document wherein the spatial information is stored according to a proposed embodiment;
Fig. 4 is a flow diagram of a method for generating embeddings for a reference document wherein supplementary information is generated according to a proposed embodiment;
Fig. 5 is a flow diagram of a method for answering a query related to a reference document for which embeddings have been generated according to a proposed embodiment;
Fig. 6 is a flow diagram of a method for answering a query related to a reference document for which embeddings have been generated according to a proposed embodiment;
Fig. 7 is a block diagram of a system for generating embeddings for a reference document according to a proposed embodiment; and
Fig. 8 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to generating embeddings for a reference document. According to proposed concepts, a number of possible solutions may be implemented separately or jointly. That is, although these possible solutions may be described below separately, two or more of these possible solutions may be implemented in one combination or another.

Embodiments of the invention aim to provide a method for generating embeddings for a reference document. This can be achieved by considering the spatial relationship between text and at least one non-textual element in the reference document and then using this either during embedding of the reference document such that the relationship can be stored together with the text, or by storing the information, therefore facilitating retrieval of relevant non-textual elements when text is retrieved in future, e.g., during answer generation.

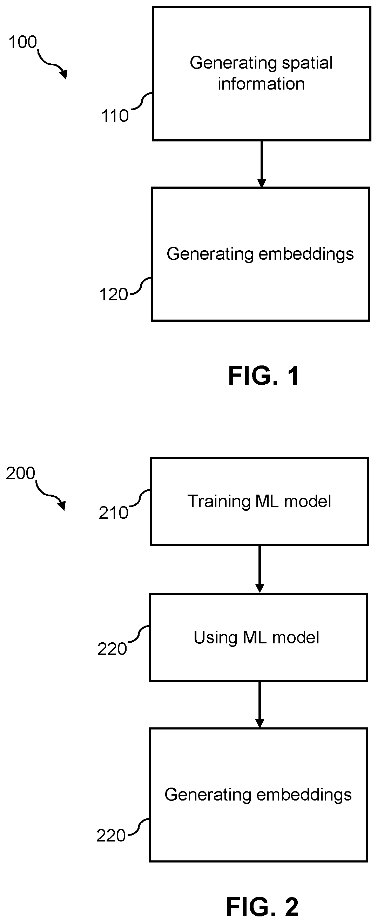

Referring now to Fig. 1, there is depicted a simplified flow diagram of a computer-implemented method 100 for generating embeddings for a reference document according to a proposed embodiment.

The method 100 starts with step 110 which comprises generating spatial information for a reference document. The reference document could be, for example, an instruction manual, a clinical instruction for use (IFU) document, a textbook, or any other document which may contain information which a model may reference in future. The reference document comprises text and at least one non-textual element. A non-textual element is any element in the document the content of which does not exclusively consist of text. For example, a diagram is still to be understood as a non-textual element even if it contains some text as its semantic content does not exclusively consist of text but rather is also contained in the structuring of the diagram, etc.

For example, in this embodiment, the at least one non-textual element comprises at least one of: an image; a figure; a table; and a white space of a size (i.e., an area) above a predetermined threshold. These are all particularly useful examples of non-textual elements which it may be beneficial to retrieve and output during answer generation.

It should be noted that when the non-textual element(s) comprise a table, the spatial information can (in addition to comprising coordinates of the table as a whole) comprise coordinates of table entries within the table. This provides a useful way to allow a model to understand, retrieve and use information contained within a table. In other words, the spatial information (e.g., a machine-learning model) can also be applied to the processing of tables, which is another problem with typical RAG systems. For example, by storing the coordinates of the different table entries (the table consisting of multiple rectangular boxes), the relationship between the rows and columns can be preserved without the need for complicated markup language. The coordinate information from the tables can then be embedded together with the table content.

The spatial information generated in step 110 indicates a spatial relationship between the text (e.g., at least one textual element) and the at least one non-textual element and can take any suitable form for doing so. For instance, the spatial information could take an absolute or relative form, e.g., indicating the position of the text and the at least one non-textual element with reference to the reference document as a whole or only relatively to one another, i.e., purely distance from one another (and optionally direction from one another). The spatial information can alternatively be referred to as morphological information.

In this embodiment, the spatial information comprises coordinate information for a plurality of chunks of text in the reference document and the at least one non-textual element. This provides a particularly effective form of spatial information, allowing the spatial relationships of various chunks of the text with the at least one non-textual element to be stored, therefore allowing the relevance of the non-textual element to the text to be more reliably determined (i.e., chunk by chunk). As the skilled person would understand, a chunk can be understood as any combination and size of content available in the document, e.g. a paragraph, passage, and/or page of a document, i.e., a portion of a document. It should be noted that in some embodiments, the coordinate information comprises the coordinates of four corners of each of a plurality of bounding boxes, however, in other embodiments other suitable coordinate systems can be used. In a preferred embodiment, the reference document is considered as a single (long) canvas formed by concatenation of different pages and in this way, the page information is automatically present in the coordinates (e.g., how far down the single canvas an element is).

For example, for most documents, it can be assumed that text segments (i.e., chunks) have rectangular bounding box shapes. This can also be assumed for the non-textual elements. The bounding boxes may or may not overlap with each other dependent on a user's preferences. Moreover, an image bounding box may be contained inside of a text bounding box or vice versa. For example, if text detection within image algorithms are used, the text bounding box may be inside of the image bounding box.

In a specific example of the invention, to extract the distance information between chunks, with respect to the document from which the chunks are extracted, reference points can be defined within the document. Definition of the reference points can be in terms of their number and position, and eventually their coordinates. These definitions can be: rule-based: for example, each page has a predefined size and it can be divided into X (e.g., 16) same-sized squares (grids), with the intersection points of these grids being considered as the reference points; white-space based: for example, white-spaces in the documents can be used to determine the bounding boxes for the reference points/areas; non-white-space based: for example, spaces occupied by text and images/figures/tables can be used to determine bounding boxes for the reference points/areas; and/or inter-document relationship based: for example, inter-document relationships between different document elements (such as text, images, sections, special segments, white spaces, etc.) can be used to determine reference areas and, for example, these can be input into a mathematical function that calculates reference coordinates. Having the reference coordinates, the spatial information (e.g., a machine-learning model or the output of one) can be constructed, e.g., by relating the text chunks and non-textual elements to the reference points. Having such reference points is also useful to determine different chunking rules per page. Of course, as the skilled person would appreciate, different shapes other than rectangles can be used as bounding boxes for modelling the reference points/areas - the reference points can then be determined using shape specific rules, taking the geometric properties into account.

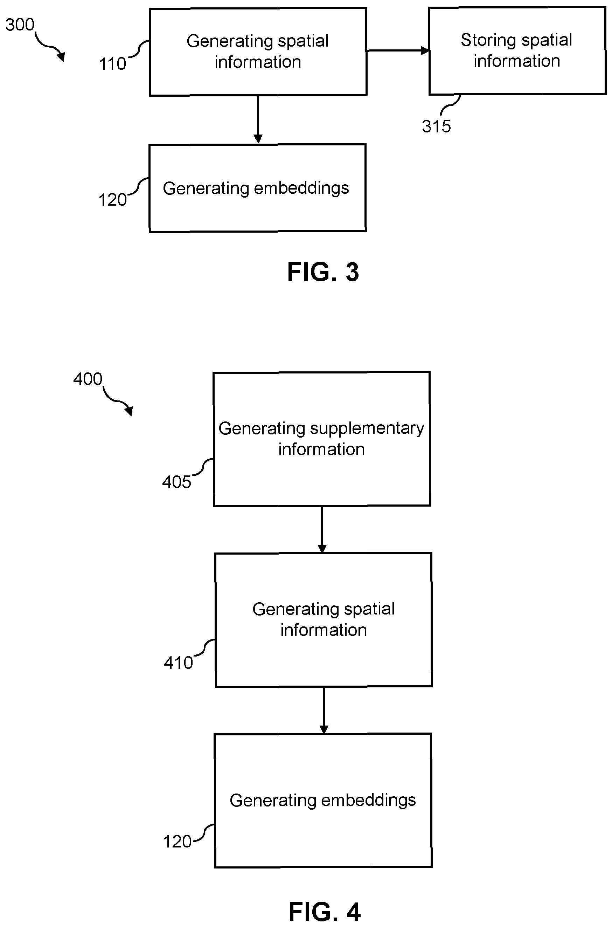

The method 100 also comprises step 120 in which the reference document is input into an embedding model to generate embeddings for the reference document. As the skilled person would know, an embedding model is a machine learning model that transforms data (like words, images, or items) into dense vector representations in a continuous space. These vectors capture semantic or structural relationships, enabling similar inputs to have similar embeddings for tasks like search, clustering, or recommendation. In some embodiments, as will be described in more detail in Fig. 2, the generated spatial information can also be input into the embedding model to generate the embeddings for the reference document. For example, the embedding model can comprise separate components for the embedding of the text and the embedding of the spatial information such that both can then be stored together as embeddings (e.g., as a vector store). In other embodiments, as will be described in more detail in Fig. 3, the spatial information is not input into the embedding model but instead is stored (separately to the embeddings but in some way linked to the embeddings). That is, in this embodiment, the spatial information generated in step 110 is either also input into the embedding model to generate embeddings for the reference document or it is stored (e.g., in a memory). More detail will be provided on these two options further on.

In some embodiments, the reference document further comprises at least one indexing element. An indexing element is a data structure or marker that facilitates efficient search and retrieval by mapping content (like terms or sections) to their locations within the document and in this embodiment comprises at least one of: a chapter name; a section name; a page number; a number of figures and/or images per page; information indicating the relationship between rows and columns of a table; information indicating the size of images; a number of tables per page; information indicating page design (e.g., margins, formatting, rules for placing textual and non-textual elements, etc.); and information indicating white space size and position (e.g., the position of a white space of a size (i.e., area) above a predetermined threshold). In other embodiments, as the skilled person would appreciate, the indexing element(s) can take any suitable form. In these embodiments then, the spatial information can further indicate the spatial relationship between the at least one indexing element and the text and the at least one non-textual element. This thus allows useful additional/supplementary information to be stored along with the text in the embeddings for the reference document which may inform answer generation using the reference document, for example, taking into account the structuring of the reference document. Furthermore, this additional information can be used during the generation of an output to, for example, more faithfully replicate the look and feel of the reference document (e.g., using white spaces).

In other words, in addition to the spatial information, other types of document-specific information can be extracted and embedded together with the chunks. This includes information such as chapter names, section names, page numbers, number of figures per page, information illustrating the relationship between rows and columns of a table, etc. In other words, indexing information. Using such document-driven meta-information, the retrieval and generation process can be improved. For example, this information can be used to check and correct if chunks are cut prematurely (e.g., at a page break), to retrieve chunks from the same section, and/or to rank and select chunks depending on where they occur and belong in the reference document. To implement this, the coordinates of the location of section names, chapter names, etc., can be extracted and used when encoding the text corresponding to these items.

Referring now to Fig. 2, there is depicted a flow diagram of a computer-implemented method 200 for generating embeddings for a reference document wherein the spatial information comprises an output of a machine-learning model according to a proposed embodiment.

Compared to method 100, in method 200, step 110 has essentially been replaced by steps 210 and 220. Step 210 comprises generating the spatial information by training a machine-learning model on extracted coordinates of (chunks of) the text and the at least one non-textual element in the reference document, wherein the spatial information comprises an output of the machine-learning model. The trained machine-learning model can thus also be referred to as a morphological model. Step 220 thus comprises using the trained morphological model (i.e., the machine-learning model trained to learn morphological information) to generate said output, the output comprising coordinates of relevant (textual and/or non-textual) elements for each textual element (e.g., for each chunk) of the reference document. Of course, the at least one non-textual element present in the reference document will be a relevant element for at least one textual element (or else it would not be in the reference document). This provides a particularly effective form of spatial information, allowing a machine-learning model to essentially learn the spatial relationship between text in the reference document and one or more non-textual elements and thus output coordinates of relevant elements (textual and/or non-textual) for each textual element which can be stored in the embeddings for the reference document.

As the skilled person would appreciate, elements can be deemed relevant to one another in a variety of different ways. For example, advantageously, the relevant (textual and/or non-textual) elements can be determined based on a distance between coordinates of said elements. For example, this can be rule-based, assuming that elements within a certain predetermined distance of one another are relevant. This provides a particularly efficient system for retrieving relevant non-textual elements, though as the skilled person would appreciate, in other embodiments other methodologies can be used. For example, alternatively, or in addition, the relevancy of elements to one another can be based on semantic information within the elements. This can help ensure that a non-textual element is, for example, indeed relevant to a textual element rather than merely close to. In these embodiments, the semantic information is generated using an LLM or a natural language understanding, NLU, algorithm. These provide effective ways to generate semantic information.

In other words, one aspect of a specific embodiment of the invention is learning the relationship between non-textual elements (such as images) and text (e.g., chunks) based on their coordinates in the reference document from which they are extracted. This can then be used to construct a morphological/spatial model for each document. The morphological model can then take text as input (e.g., a passage of the reference document) and output coordinates of the input text and relevant texts and images (e.g., nearby texts and images). These output coordinates for each passage/chunk/element of the text can then form the spatial information which can be input into the embedding model in step 220 along with the reference document to generate the embeddings for said reference document. Optionally, the morphological model can also output all the relevant text itself and/or the relevant images themselves as well as their coordinates.

As described, the machine-learning (i.e., morphological) model output can be used during encoding of the document. For example, during encoding (i.e., embedding), the coordinate information corresponding to the current chunk of text (the chunk of text currently being analysed/processed), related chunks of text, and related non-textual elements can be extracted and also encoded (i.e., embedded). It should be noted that the coordinate information can also be used during retrieval (e.g., during answer generation) to retrieve relevant non-textual elements (e.g., images or tables relevant to textual elements also being retrieved), and during output construction (e.g., to determine how to show the answer of the large language model) to determine where, in what order, and in what size to use the non-textual elements in relation to the output text.

Step 220 is substantially the same as step 120 described in relation to method 100 of Fig. 1, though in this embodiment, the spatial information (i.e., in this embodiment, the output of the morphological model) is also input into the embedding model to generate the embeddings for the reference document. It should be noted, however, as would be apparent to the skilled person, that coordinate information or supplementary information is not embedded alone but rather is always attached to a chunk/element of text such that it is embedded together with the chunk/element of text.

In an example of training the morphological model, the document is divided into different text segments (i.e., chunks). It is then checked if there are non-textual elements (e.g., images or figures) related to those text segments. Chunking settings can then be updated and the process repeated. It should also be noted that the chunking strategy and the definition of text segments (e.g., the size and/or form of the chunks) can be set per document type and may be dependent on document characteristics.

For text segments, in addition to coordinates, a simple text interpretation step can be implemented (e.g., using one or more LLMs or natural language understanding (NLU) algorithms or even keyword matching). In this step, it is checked if there is any reference to non-textual elements (e.g., a figure) as well as references to the positioning of the non-textual elements (e.g., below, above, following, in section 2, etc.) as well as the use of special symbols within the text (e.g., :).

The learning of the morphological method can be re-iterated until a predetermined learning criteria is no longer improving. An example criterion is the distance between the middle points of related image and text bounding boxes (for example, the bounding boxes may be considered related if there is a reference to an image in the text or merely within a certain distance). In this case, the aim will be to minimize the distance with each learning iteration, and chunk characteristics (e.g., chunking strategy and settings such as size) can be selected to help achieve this. As the skilled person would appreciate, other predetermined learning criterion can be set.

In an example of the invention, the trained morphological model is then used during the embedding process, wherein both the reference document and one or more outputs of the trained morphological model (e.g., an output for each chunk of the reference document, e.g., coordinates of relevant elements for each chunk of the reference document) are input into an embedding model, resulting in a single vector store. In more detail, the reference document embeddings are generated in the usual way using an embedding model. In this invention, however, in addition to the text, coordinate information (e.g., the output of the morphological model) is also embedded. The coordinate information can include the coordinates of a given text chunk, any related non-textual elements and any related text chunks.

As described above, indexing information can also be utilised and, for example, included in the morphological model. This can be done as follows: bounding boxes for repeating document elements such as section names, chapter names, page numbers, summary sections, attention words that are present in the document are defined - the occurrence of these is obviously dependent on the document and they may not always be present; the coordinates of the bounding box of the document element and its content is then used in the creation of the morphological model, as described above. In other words, the indexing elements can essentially be treated in the exact same way in which the non-textual elements are treated. The task of determining how the text chunks relate to the different indexing elements is different though: the text in the bounding box can be used to determine which chunks relate to which indexing elements, and/or document-specific rules can be used to determine which elements relate to which chunks (for example, all chunks after section X and before section Y headers relate to section X).

Referring now to Fig. 3, there is depicted a flow diagram of a computer-implemented method 300 for generating embeddings for a reference document according to a proposed embodiment. Steps 110 and 120 are substantially the same as have already been described in relation to method 100 of Fig. 1.

In this embodiment, the spatial information generated in step 110 is not input into the embeddings model in step 120 but rather is stored in step 315, e.g., in a memory, separately to the embeddings but linked in some way to the embeddings. The skilled person would be aware of the many ways in which the spatial information could be stored in step 315 such that it is not part of the embeddings, but it is connected/linked to the embeddings, e.g., stored in the same folder in a memory.

Referring now to Fig. 4, there is depicted a flow diagram of a computer-implemented method 400 for generating embeddings for a reference document according to a proposed embodiment. Step 120 is substantially the same as has already been described in relation to method 100 of Fig. 1.

Method 400 starts with step 405 of generating supplementary information for the reference document. In this embodiment, the supplementary information comprises at least one visual property and/or at least one qualitative property of the text and/or the at least one non-textual element. In this embodiment, the visual property comprises at least one of: size; color; font; and formatting. These are all useful visual properties which may, for example, imply an importance/relevancy of the element, though in other embodiments, the visual property can comprise any other type of visual property. In this embodiment, a qualitative property may comprise at least one of: significance; uniqueness; level of detail; complexity; prominence; and type. These are all useful qualitative properties which may, for example, imply an importance/relevancy of the element though in other embodiments, the qualitative property can comprise any other types of qualitative/semantic property.

Step 410 is substantially the same as step 110 of method 100 though generating the spatial information is further based on the generated supplementary information. This allows further useful additional/supplementary information to be stored along with the text either in the embeddings for the reference document or separately to the embeddings, which may inform answer generation using the reference document in future, for example, taking into account purely visual and/or qualitative properties of elements which may inform the importance/relevance of the element.

In other words, in this embodiment, in addition to the spatial information, it is proposed to embed information relating to visual and/or qualitative aspects of the elements (textual and/or non-textual) in the reference document. This can likewise be used in the retrieval stage and also in outputting the retrieved information (as described in methods 500 and 600). This can thus improve the quality of the LLM output because (i) during retrieval, all relevant information can be retrieved, and (ii) during the prompt generation, more emphasis can be given to 'important' chunks. Thus, in this embodiment, it is proposed to additionally extract visual (e.g., size, colours, etc.) and/or qualitative (e.g., significance, uniqueness, criticality, emphasis, etc.) properties for text, images, figures, tables, etc. and then use this information during retrieval post-processing and output generation.

For text, the visual properties can, for example, include font and paragraph properties, and the qualitative properties can, for example, include aspects related to: the novelty of the text compared to the rest of the text - determined by semantic analysis or keyword comparison; prominence of the text - determined by the positioning of the text with respect to other elements, especially white space; uniqueness of the text - determined by similarity analysis; criticality of the text - determined by semantic analysis; compaction of the text - determined by the relationship between the size of the chunk and the amount of different types of information; type of text (e.g., abstract, introduction, summary, conclusion, etc.) - determined by semantic analysis and/or position of the text with respect to other elements, as well as optionally, keyword detection.

For tables, the visual properties can include aspects such as size, number of rows, columns, colour of cells, thickness of lines, etc. The qualitative properties of tables are similar to the properties mentioned above if the table includes text. These properties can be determined for each table cell independently.

For figures/images, the visual properties can include a description of what is seen in the image, for example, generated using an algorithm which essentially generates a caption for the image, of which the skilled person would be aware. The qualitative properties can include importance, uniqueness, level of detail, technical expertise needed to understand it, etc.

The extracted spatial, visual and qualitative information can then be embedded together with the corresponding chunks. Of course, a chunk could contain multiple text, image and table elements. The information from all of these elements could then be considered as chunk information. Alternatively or additionally, an LLM or NLP algorithm could be used to combine and summarize all the information related to all the different elements in the chunk, and then this summary and the chunk can be used as input to the embedding model.

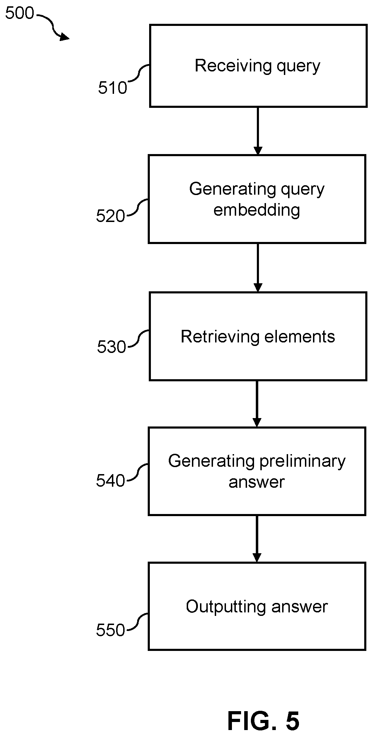

Referring now to Fig. 5, there is depicted a computer-implemented method 500 for answering a query related to a reference document for which embeddings have been generated using a method according to any herein-disclosed embodiment, wherein the spatial information was also input into the embedding model to generate the embeddings for the reference document according to a proposed embodiment.

The method 500 starts with step 510 comprising receiving a first query from an agent. The first query can be alternatively referred to as a first question or a first input - the query does not have to explicitly be a question, but rather merely an input which the LLM-based model (described in more detail in step 540) is expected to process and/or to respond to. An agent can be understood as either a human user or a machine agent (e.g., software, a system, an AI model, etc.).

Step 520 processing the first query with the embedding model which was used to generate the embeddings (for the reference document) to generate a query embedding. In other words, the first query is translated into vector space using the same embedding model (i.e., an embedding model with the same parameters) which was used to generate the embeddings for the reference document.

Step 530 comprises retrieving at least one text chunk (relevant to the first query, e.g., a text chunk the embedding of which is close in vector space to the query embedding) and at least one relevant non-textual element (i.e., a non-textual element relevant to the retrieved at least one text chunk) is retrieved from the reference document using the query embedding and the embeddings generated for the reference document (e.g., to first find at least one text chunk relevant to the first query and then at least one non-textual element relevant to said at least one text chunk). In other words, using the spatial information stored in the embeddings for the reference document, one or more non-textual elements deemed relevant to the at least one text chunk can be retrieved.

Step 540 comprises inputting the retrieved at least one text chunk into a large language model (LLM) based model to generate a preliminary answer. In some embodiments, the LLM-based model consists of a single LLM. In other embodiments, the LLM-based model can comprise multiple LLMs, for example, adapted to run in parallel. In this embodiment, the LLM-based model specifically comprises a Retrieval Augmented Generation (RAG) model Retrieval-Augmented Generation (RAG) is an advanced AI framework that integrates retrieval-based and generation-based methodologies to enhance the accuracy and relevance of generated responses. It operates by first retrieving pertinent information from an external knowledge base, such as structured databases, document repositories, or real-time search engines, and subsequently incorporating this data as contextual input for a generative language model. This augmentation enables the model to synthesize responses that are not only informed by its pre-trained knowledge but also grounded in up-to-date and domain-specific information, thereby mitigating issues such as hallucination and factual inconsistency. RAG is particularly advantageous in applications requiring high precision and real-time adaptability, such as in clinical settings. It should be noted that in some embodiments in which the LLM is able to process non-textual elements such as the retrieved at least one non-textual element, this can also be input into the LLM-based model to help generate the preliminary answer.

Step 550 comprises outputting an answer based on the generated preliminary answer and the retrieved at least one relevant non-textual element. For example, the output answer may comprise the generated preliminary answer alongside the one or more relevant non-textual elements, or the preliminary answer may be adjusted/adapted in some way. Outputting the answer can be understood as communicating the answer to the agent in any suitable way, e.g., via display on a screen or via an audio speaker, via signal/data to a software process, as an input to an AI model, etc.

In some embodiments, the embeddings for the reference document comprise embeddings generated from an output of a morphological model, the morphological model comprising a machine-learning model trained on extracted coordinates of the text and the at least one non-textual element in the reference document, and the output comprising coordinates of relevant elements for each textual element of the reference document. In other words, in some embodiments, the embeddings have been generated for the reference document according to method 200 of Fig. 2.

In a specific example of the invention being used in a conversation system (a complete RAG), an agent's query is used to retrieve the most relevant text chunks, as is typical. However, now, according to the invention, spatial information (e.g., coordinate information) is also available. Using the spatial information (e.g., coordinates), relevant images are retrieved (e.g., images which have (sufficiently close) matching coordinates). Further, additional (nearby) text chunks can optionally be retrieved using the coordinates too. The prompt can then be constructed based on the retrieved text as well as the text chunks' and non-textual elements' coordinates and the answer generated. In other words, according to the invention, the coordinate information can also be used during prompt construction (along with appropriate instructions to the LLM on how to use such information). The LLM output will then consist of text and coordinates, said coordinates being used during output construction to determine which non-textual elements to insert into the output (as well as in what size and where). In case the LLM has multimodal capabilities, the retrieved raw non-textual elements may also be used during prompt construction and answer generation. It should also be noted that each retrieved non-textual element can be assigned an ID number or a pointer, and the LLM output could thus use these ID references (e.g., the ID number, pointer, and/or coordinates) to indicate the relevant non-textual elements which should be in the output.

When answering an agent's query, the only purpose of the retrieval process is to find chunks in a reference document that are relevant to the agent's query. Typically, this search is only based on a semantic search exploring the similarity between the query (and queries which are derived/generated based on the original query, context, and history of the conversation, etc.) and chunks. This, however, is a limited way of looking at things, completely disregarding how the reference document is built and structured. By allowing overlap between chunks, some aspects of the document's structure can be indirectly captured, however such relationships may later be lost when creating the embeddings and when performing the search in vector space. An explicit method of storing the relationships between elements can be based on morphological properties of the document and, for example, it can be generally assumed that document elements that are close to each other are more related than elements which are distant from one another, though of course, there are cases where this is not true.

For an LLM to generate a good answer, two things are important. First, it is essential that all relevant chunks (to the query and derived queries) are retrieved - if this is not the case then the answer will be generated with incomplete knowledge and so may result in an incomplete answer (and increase the likelihood of hallucinations). Secondly, it is important to have variability between chunks and to able to indicate to the LLM which chunks are more important than others. This is needed in order to help the LLM produce a more targeted response and reduce the potential bias. It should be noted that if the embeddings for the reference document also include supplementary information (visual and/or qualitative properties), the LLM can also make use of this information. In a specific example, ranking and selection of the retrieved elements can be based on the qualitative information - this can ensure that critical, important, unique, etc. information is ranked higher and selected as input for the generative model. The visual information related to the selected elements can then also be used by the generative model to, for example, produce the output in the same visual characteristics as in the original document. For example, the same font and paragraph properties for the text elements, the same line and cell properties for a table, the same distribution of white and non-white space, and similar positioning of text, images and tables with respect to each other can be reproduced in the LLM output.

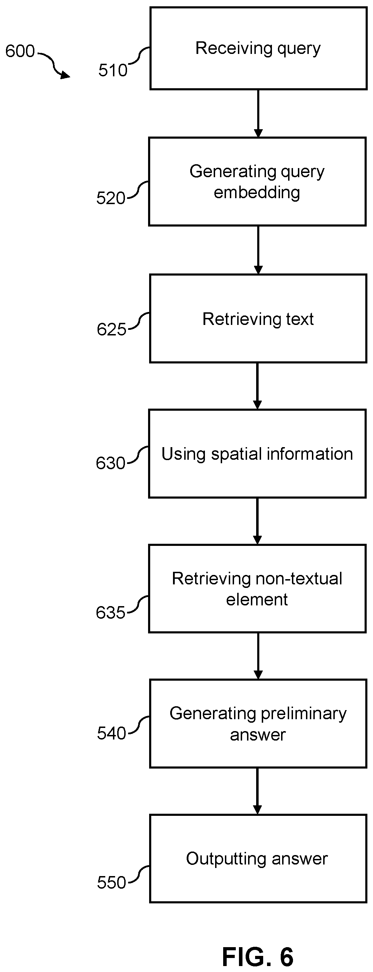

Referring now to Fig. 6, there is depicted a computer-implemented method 600 for answering a query related to a reference document for which embeddings have been generated, wherein the spatial information was stored, according to a proposed embodiment.

Steps 510, 520, 540 and 550 are substantially the same as have been described in relation to method 500 of Fig. 5.

Step 625 comprises retrieving at least one text chunk from the reference document using the query embedding and the embeddings generated for the reference document. As described above in relation to step 530, at least one text chunk (relevant to the first query, e.g., a text chunk the embedding of which is close in vector space to the query embedding) is retrieved from the reference document using the query embedding and the embeddings generated for the reference document (e.g., to find at least one text chunk relevant to the first query).

Step 630 comprises using the stored spatial information (i.e., the spatial information stored separately to the generated embeddings) to locate at least one non-textual element relevant to the retrieved at least one text chunk in the reference document. For example, the spatial information can be used to find the coordinates of at least one non-textual element which is close to the coordinates of the retrieved at least one text chunk and thereby can be inferred to be relevant. In embodiments wherein the spatial information comprises a trained morphological model (as described earlier), step 630 can comprise using the trained morphological model on each of the at least one retrieved text chunks in order to output the coordinates of any relevant (textual and/or non-textual elements). In this embodiment, it is assumed that there is at least one non-textual element which is relevant to the retrieved at least one text chunk. Thus, using the output coordinates of the morphological model, the relevant elements, including the relevant at least one non-textual element can be retrieved (i.e., in step 635). In step 635, the located at least one non-textual element is retrieved.

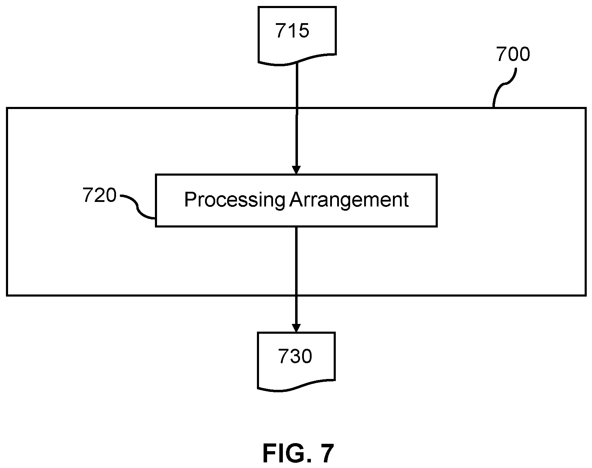

Referring now to Fig. 7, there is depicted a system 700 for generating embeddings for a reference document according to a proposed embodiment. The system 700 comprises a processing arrangement 720.

The processing arrangement 720 can be configured to perform any of the herein-disclosed methods (e.g., method 100, 200, 300, 400, 500 or 600 though it is noted that for method 500 or 600, the system 700 would thus be for answering a query related to a reference document for which embeddings have been generated)), however, in this embodiment, the processing arrangement 720 is specifically configured to perform method 100, i.e., to: generate spatial information for a reference document, the reference document comprising text and at least one non-textual element, and the spatial information indicating a spatial relationship between the text and the at least one non-textual element; and input the reference document into an embedding model to generate embeddings for the reference document; wherein the spatial information is also input into the embedding model to generate embeddings for the reference document or the spatial information is stored. The input 715 of the system is thus a reference document comprising text and at least one non-textual element and the output 730 of the system is thus embeddings for the reference document.

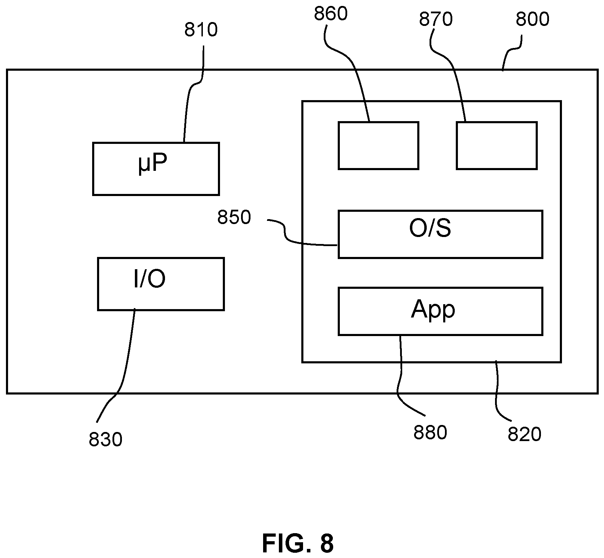

Fig. 8 illustrates an example of a computer 800 within which one or more parts of an embodiment may be employed. Various operations discussed above may utilize the capabilities of the computer 800. In this regard, it is to be understood that system functional blocks can run on a single computer or may be distributed over several computers and locations (e.g. connected via internet).

The computer 800 includes, but is not limited to, PCs, workstations, laptops, PDAs, palm devices, servers, storages, and the like. Generally, in terms of hardware architecture, the computer 800 may include one or more processors 810, memory 820 and one or more I/O devices 830 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 810 is a hardware device for executing software that can be stored in the memory 820. The processor 810 can be virtually any custom made or commercially available processor, a central processing unit (CPU), a digital signal processor (DSP), or an auxiliary processor among several processors associated with the computer 800, and the processor 810 may be a semiconductor based microprocessor (in the form of a microchip) or a microprocessor.

The memory 820 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 820 may incorporate electronic, magnetic, optical, and/or other types of storage media. Note that the memory 820 can have a distributed architecture, where various components are situated remote from one another, but can be accessed by the processor 810.

The software in the memory 820 may include one or more separate programs, each of which comprises an ordered listing of executable instructions for implementing logical functions. The software in the memory 820 includes a suitable operating system (O/S) 850, compiler 860, source code 870, and one or more applications 880 in accordance with exemplary embodiments. As illustrated, the application 880 comprises numerous functional components for implementing the features and operations of the exemplary embodiments. The application 880 of the computer 800 may represent various applications, computational units, logic, functional units, processes, operations, virtual entities, and/or modules in accordance with exemplary embodiments, but the application 880 is not meant to be a limitation.

The operating system 850 controls the execution of other computer programs, and provides scheduling, input-output control, file and data management, memory management, and communication control and related services. It is contemplated by the inventors that the application 880 for implementing exemplary embodiments may be applicable on all commercially available operating systems.

Application 880 may be a source program, executable program (object code), script, or any other entity comprising a set of instructions to be performed. When a source program, then the program is usually translated via a compiler (such as the compiler 860), assembler, interpreter, or the like, which may or may not be included within the memory 820, so as to operate properly in connection with the O/S 850. Furthermore, the application 880 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 830 may include input devices such as, for example but not limited to, a mouse, keyboard, scanner, microphone, camera, etc. Furthermore, the I/O devices 830 may also include output devices, for example but not limited to a printer, display, etc. Finally, the I/O devices 830 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 830 also include components for communicating over various networks, such as the Internet or intranet.

If the computer 800 is a PC, workstation, intelligent device or the like, the software in the memory 820 may further include a basic input output system (BIOS) (omitted for simplicity). The BIOS is a set of essential software routines that initialize and test hardware at start-up, start the O/S 850, and support the transfer of data among the hardware devices. The BIOS is stored in some type of read-only-memory, such as ROM, PROM, EPROM, EEPROM or the like, so that the BIOS can be executed when the computer 800 is activated.

When the computer 800 is in operation, the processor 810 is configured to execute software stored within the memory 820, to communicate data to and from the memory 820, and to generally control operations of the computer 800 pursuant to the software. The application 880 and the O/S 850 are read, in whole or in part, by the processor 810, perhaps buffered within the processor 810, and then executed.

When the application 880 is implemented in software it should be noted that the application 880 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 880 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-6, and the system of Fig. 7, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 8 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for generating embeddings for a reference document, the method comprising:
generating spatial information (110) for a reference document, the reference document comprising text and at least one non-textual element, and the spatial information indicating a spatial relationship between the text and the at least one non-textual element; and
inputting the reference document into an embedding model to generate embeddings (120) for the reference document;
wherein the spatial information is also input into the embedding model to generate embeddings for the reference document or the spatial information is stored.

2. The computer-implemented method of claim 1, wherein the spatial information is also input into the embedding model, wherein the spatial information comprises an output of a machine-learning model, and generating the spatial information comprises: training the machine-learning model (210) on extracted coordinates of the text and the at least one non-textual element in the reference document; and using the trained machine-learning model (220) to generate the output, the output comprising coordinates of relevant elements for each textual element of the reference document.

3. The computer-implemented method of claim 1 or 2, wherein the spatial information comprises coordinate information for a plurality of chunks of text in the reference document and the at least one non-textual element.

4. The computer-implemented method of claim 1, wherein the spatial information is stored (315), and wherein the spatial information comprises a machine-learning model trained on extracted coordinates of the text and the at least one non-textual element in the reference document.

5. The computer-implemented method of any preceding claim, wherein the at least one non-textual element comprises at least one of: an image; a figure; a table; and a white space of a size above a predetermined threshold.

6. The computer-implemented method of claim 5, wherein the at least one non-textual element comprises a table, and wherein the spatial information comprises coordinates of table entries within the table.

7. The computer-implemented method of any preceding claim, wherein the reference document further comprises at least one indexing element, and the spatial information further indicates the spatial relationship between the at least one indexing element and the text and the at least one non-textual element; and
wherein an indexing element comprises at least one of: a chapter name; a section name; a page number; a number of figures and/or images per page; information indicating the relationship between rows and columns of a table; information indicating the size of images; a number of tables per page; information indicating page design; and information indicating white space size and position.

8. The computer-implemented method of any preceding claim, wherein the method further comprises:
generating first supplementary information (405) for the reference document, the first supplementary information comprising at least one visual property of the text and/or the at least one non-textual element; and
wherein generating the spatial information (410) is further based on the generated first supplementary information; and
optionally, wherein a visual property comprises at least one of: size; color; font; and formatting.

9. The computer-implemented method of any preceding claim, wherein the method further comprises:
generating second supplementary information (405) for the reference document, the second supplementary information comprising at least one qualitative property of the text and/or the at least one non-textual element; and
wherein generating the spatial information (410) is further based on the generated second supplementary information; and
optionally, wherein a qualitative property comprises at least one of: significance; uniqueness; level of detail; complexity; prominence; and type.

10. A computer-implemented method (500) for answering a query related to a reference document for which embeddings have been generated using a method according to any of claims 1 to 9, wherein the spatial information was also input into the embedding model to generate the embeddings for the reference document, the method comprising:
receiving a first query (510) from an agent;
processing the first query with the embedding model used to generate the embeddings to generate a query embedding (520);
retrieving at least one text chunk and at least one relevant non-textual element (530) from the reference document using the query embedding and the embeddings generated for the reference document;
inputting the retrieved at least one text chunk into a large language model, LLM, based model (540) to generate a preliminary answer; and
outputting an answer (550) based on the generated preliminary answer and the retrieved at least one relevant non-textual element.

11. The computer-implemented method of claim 10, wherein the embeddings comprise embeddings generated from an output of a machine-learning model trained on extracted coordinates of the text and the at least one non-textual element in the reference document, and the output comprising coordinates of relevant elements for each textual element of the reference document.

12. A computer-implemented method (500) for answering a query related to a reference document for which embeddings have been generated using a method according to any of claims 1 to 9, wherein the spatial information was stored, the method comprising:
receiving a first query (510) from an agent;
processing the first query with the embedding model used to generate the embeddings to generate a query embedding (520);
retrieving at least one text chunk (625) from the reference document using the query embedding and the embeddings generated for the reference document;
using the stored spatial information (630) to locate at least one non-textual element relevant to the retrieved at least one text chunk in the reference document;
retrieving the located at least one non-textual element (635);
inputting the retrieved at least one text chunk into a large language model, LLM, based model (540) to generate a preliminary answer; and
outputting an answer (550) based on the generated preliminary answer and the retrieved at least one relevant non-textual element.

13. The computer-implemented method of any of claims 10 to 12, wherein the LLM based model comprises a Retrieval Augmented Generation, RAG, model.

14. A computer program product comprising computer program code means which, when executed on a computing device having a processing system, cause the processing system to perform all of the steps of the computer-implemented method according to any of claims 1 to 13.

15. A system (700) for generating embeddings for a reference document, the system comprising:
a processing arrangement (720) configured to:
generate spatial information for a reference document, the reference document comprising text and at least one non-textual element, and the spatial information indicating a spatial relationship between the text and the at least one non-textual element; and
input the reference document into an embedding model to generate embeddings for the reference document;
wherein the spatial information is also input into the embedding model to generate embeddings for the reference document or the spatial information is stored.
